# EUROPÄISCHE PATENTSCHRIFT

(11) **EP 3 480 175 B1**
(45) Veröffentlichungstag und Bekanntmachung des Hinweises auf die Patenterteilung: **09.12.2020**
(21) Anmeldenummer: 18200865.6
(22) Anmeldetag: 17.10.2018
(51) Int. Cl.: C03C 1/00, C03C 11/00

(54) **MIKROHOHLKUGELN AUS GLAS UND VERFAHREN ZU DEREN HERSTELLUNG**
HOLLOW MICROSPHERES MADE OF GLASS AND METHOD FOR THEIR PREPARATION
MICROSPHÈRES CREUSES EN VERRE ET LEUR PROCÉDÉ DE FABRICATION

(30) Priorität: 06.11.2017 DE 102017219692
(43) Veröffentlichungstag der Anmeldung: 08.05.2019
(73) Patentinhaber: DENNERT PORAVER GmbH, 92353 Postbauer-Heng (DE)
(72) Erfinder: NEIDHARDT, Wolfram, 91161 Hilpoltstein (DE)
(74) Vertreter: Müller Schupfner & Partner Patent- und Rechtsanwaltspartnerschaft mbB

(56) Entgegenhaltungen:
- WO-A1-98/33748
- WO-A1-2017/194485
- DE-A1- 2 603 534
- DE-A1-102015 003 398
- US-A- 4 778 502
- US-B1- 8 951 608

## Beschreibung

Die Erfindung bezieht sich auf Mikrohohlkugeln aus Glas sowie auf ein Verfahren zu deren Herstellung.

Mikrohohlkugeln aus Glas, also sphärische Hohlpartikel mit typischen Durchmessern im Sub-Millimeterbereich (ca. 1 bis 1.000 Mikrometer) werden vielfach als Leichtzuschlagstoffe in Kompositmaterialien und Leichtbeton eingesetzt. Des Weiteren finden diese - auch als "hollow glas microspheres (HGM)" bezeichneten - Mikrohohlkugeln unter anderem Verwendung in der Medizin, der Verbrauchsgüterindustrie sowie der Öl- und Gasindustrie. Mikrohohlkugeln sind zumindest im Wesentlichen monozellulär expandiert, d.h. sie weisen eine (in Vergleich zu dem Kugeldurchmesser) dünne Glaswand auf, die einen einzigen großen, zentralen und kugelförmigen Hohlraum umschließt (wobei der Durchmesser dieses zentralen Hohlraums den Kugeldurchmesser nur geringfügig unterschreitet). Die Glaswand einer solchen Mikrohohlkugel kann allerdings weitere Hohlräume (Blasen) wesentlich kleineren Durchmessers enthalten.

Hiervon zu unterscheiden sind Blähglaspartikel, die ebenfalls häufig als Leichtzuschlagstoffe eingesetzt werden. Blähglaspartikel können ebenfalls eine sphärische oder sphäroide Außenkontur aufweisen, unterscheiden sind von den vorstehend beschriebenen Mikrohohlkugeln aber entscheidend durch ihre multizelluläre Struktur. Das Volumen von Blähglaspartikeln ist somit von einer schaumartigen Glasmatrix ausgefüllt, die eine Vielzahl von Hohlräumen umschließt, wobei jeder dieser Hohlräume klein im Vergleich zu der Partikelgröße ist.

Blähglaspartikel werden üblicherweise hergestellt, indem ein aus Glasmehl, Wasserglas und einem Blähmittel gebildetes Grünkorngranulat (auch: Brenngut) in einem Drehrohrofen expandiert wird. Um ein Verkleben der angeschmolzenen Brenngutpartikel mit der Ofenwand oder anderen Brenngutpartikeln zu vermeiden, wird regelmäßig zusammen mit dem Brenngut ein Trennmittel in den Ofen eingegeben. Als Trennmittel werden beispielsweise Kaolin oder Tonmehl eingesetzt.

Glas-Mikrohohlkugeln und Blähglaspartikel können grundsätzlich aus gleichen oder ähnlichen Ausgangsstoffen hergestellt werden. Die Herstellung von Glas-Mikrohohlkugeln ist allerdings prozesstechnisch wesentlich schwerer zu beherrschen als die Herstellung von Blähglaspartikeln. Dies liegt insbesondere daran, dass zur Herstellung von Mikrohohlkugeln die Grünkornpartikel in einem viel stärkeren Maß aufgeschmolzen werden müssen als bei der Blähglasherstellung, damit sich die zu Beginn des Expansionsprozesses bildenden Bläschen zu dem großen zentralen Hohlraum vereinigen und so die Glasmatrix an den Kugelaußenrand verdrängen können.

Mit der stärkeren Aufschmelzung der Glasmatrix nimmt aber die Klebeneigung der Partikel erheblich zu. Zudem steigt das Risiko, das die aufgeschmolzenen Partikel durch Kontakt mit anderen Partikeln oder der Ofenwand während des Expansionsprozesses zerdrückt oder zerrieben werden. Drehrohröfen sind deshalb bisher zur Herstellung von Mikrohohlkugeln aus Glas in der Regel nicht einsetzbar, jedenfalls nicht in industriellem Maßstab (Produktionsmaßstab), obwohl der Einsatz von Drehrohröfen aufgrund ihrer Robustheit, des hohen erzielbaren Durchsatzes und des vergleichsweise geringen Betriebsaufwands an sich vorteilhaft wäre. Insbesondere kann die Klebeneigung der Teilchen unter Einsatz der herkömmlichen Trennmittel regelmäßig nicht hinreichend beherrscht werden.

Mikrohohlkugeln aus Glas werden daher bisher üblicherweise in Vertikalöfen (im Folgenden auch als "Schachtofen" bezeichnet) hergestellt, in denen die Grünkornpartikel entweder in einer aufwärts gerichteten Heißgasströmung expandiert werden und dann mit der Gasströmung aus dem oberen Ende des Vertikalofens ausgetragen werden (so z.B. gemäß US 3,230,064 A) oder in denen die Grünkornpartikel im Fallen expandiert werden (so z.B. gemäß US 2007/0275335 A1).

Aus WO 98/33748 A1 ist ein Verfahren bekannt, bei dem fertige Mikrohohlkugeln aus Glas mit Aluminiumhydroxid beschichtet werden. Die Mikrokugeln werden hierzu einer wässrigen Lösung eines organischen Komplexierungsmittels und eines sauren Aluminiumsalzes zugegeben. Die resultierende Suspension wird bei einer Temperatur zwischen 150 °C und 350 °C hydrothermal behandelt.

In DE 10 2015 003 398 A1 wird vorgeschlagen, Mikrohohlkugeln aus Glas durch Expansion von Partikeln eines Glasmehls in einem Pulsationsreaktor herzustellen.

Weitere Verfahren zur Herstellung von Mikrohohlkugeln aus Glas sind aus US 4,778,502 A und DE 26 03 534 A1 bekannt.

Der Erfindung liegt die Aufgabe zugrunde, eine effektive Herstellung von Mikrohohlkugeln aus Glas zu ermöglichen.

Bezüglich eines Verfahrens zur Herstellung von Mikrohohlkugeln aus Glas wird die Aufgabe erfindungsgemäß gelöst durch die Merkmale des Anspruchs 1. In Bezug auf Mikrohohlkugeln aus Glas wird die Aufgabe erfindungsgemäß gelöst durch die Merkmale des Anspruchs 14.

Verfahrensgemäß wird zur Herstellung von Mikrohohlkugeln aus Glas eine wässrige Suspension aus Ausgangsstoffen, umfassend Glasmehl und Wasserglas angesetzt, die nachfolgend als "Ausgangs-Suspension" bezeichnet ist. Optional wird der Ausgangs-Suspension ein Blähmittel (auch als "Treibmittel" bezeichnet, z.B. Natronsalpeter oder Zucker) zugegeben. Aus der Ausgangs-Suspension werden Brenngutpartikel ("Grünkorn") hergestellt, deren Durchmesser vorzugsweise zwischen 1 Mikrometer und 700 Mikrometer, insbesondere zwischen 20 Mikrometern und 200 Mikrometern, liegen. Die untere Grenze der vorstehenden Bereichsangaben bezieht sich dabei beispielsweise auf den d₁₀-Wert der jeweiligen Korngrößenverteilung. Die obere Grenze bezieht sich beispielsweise auf den d₉₀-Wert der jeweiligen Korngrößenverteilung. Der "dₓ"-Wert (mit x = 10, 50, 90, etc.) der Korngrößenangabe bedeutet hier und im Folgenden, dass x% der Partikel eine Korngröße von maximal dₓ aufweisen. Beispielsweise gibt also der d₅₀-Wert die mittlere Partikelgröße an, bezüglich der 50% der Partikel kleiner sind. Die Brenngutpartikel werden mit einem pulverförmigen Trennmittel vermischt, bevor das Gemisch aus Brenngutpartikeln und Trennmittel in eine Brennkammer eines Ofens eingegeben wird.

In der Brennkammer, in der eine die Erweichungstemperatur des Glasmehls überschreitende Brenntemperatur herrscht, expandieren schließlich die Brenngutpartikel zu den Mikrohohlkugeln. Die Brenngutpartikel werden hierbei in einer typischen Ausprägung des Verfahrens bezüglich ihres Durchmessers um 25 % bis 70 % vergrößert bzw. expandiert (aufgebläht). Insgesamt liegt der Durchmesser der aus dem Expansionsprozess ("Blähprozess") resultierenden Mikrohohlkugeln in typischer Dimensionierung zwischen ca. 2 Mikrometern und 1000 Mikrometern, vorzugsweise zwischen 7 Mikrometern und 600 Mikrometern.

Erfindungsgemäß wird ein Trennmittel eingesetzt, das Aluminiumoxidhydroxid, AlO(OH) (CAS Nr.: 1318-23-6), enthält. Dieser Stoff, der auch als "Aluminiummetahydroxid" bezeichnet wird, wird hierbei insbesondere in der Variante γ-AlO(OPH eingesetzt, die dem Mineral Böhmit entspricht.

Die Erfindung beruht auf umfangreichen Versuchen der Anmelderin, die ergeben haben, dass sich durch die Verwendung von AlO(OH) als Trennmittel die Klebeneigung der Grünkornpartikel sowie der daraus entstehenden Mikrohohlkugeln besonders effektiv unterdrücken lässt, so dass insbesondere eine Herstellung der Mikrohohlkugeln in industriellen Drehrohröfen (das heißt im Produktionsmaßstab) mit hinreichender Effektivität ermöglicht wird.

In einer geeigneten Ausführungsform der Erfindung besteht das Trennmittel - abgesehen von gewöhnlichen Verunreinigungen in der Größenordnung von bis zu maximal 1 bis 2 Gew.-% - ausschließlich aus AlO(OH). Bevorzugt enthält das Trennmittel aber zusätzlich zu AlO(OH) auch Aluminiumhydroxid (Al(OH)₃; CAS Nr.: 21645-51-2, auch als "Aluminiumorthohydroxid" bezeichnet). Besonders gute Ergebnisse hinsichtlich der Qualität der Mikrohohlkugeln, insbesondere hoher Sphärizität und geringer Schüttdichte, wurden in vorteilhaften Ausführungen der Erfindung erzielt, bei denen als Trennmittel eine Mischung eingesetzt wurde, die - wiederum abgesehen von gewöhnlichen Verunreinigungen in der Größenordnung von maximal 1 - 2 Gew.-% - ausschließlich aus AlO(OH) und Al(OH)₃ besteht.

In vorteilhaften Ausführungsformen des gemischten Trennmittels sind die Anteile an AlO(OH) und Al(OH)₃ vorzugsweise derart gewählt,
- dass der Anteil an Al(OH)₃ in dem Gemisch aus Brenngutpartikeln und Trennmittel zwischen 6 Gew.-% und 30 Gew.-%, vorzugsweise zwischen 8 Gew.-% und 25 Gew.-% liegt, und
- dass der Anteil an AlO(OH) in dem Gemisch aus Brenngutpartikeln und Trennmittel zwischen 1 Gew.-% und 25 Gew.-%, vorzugsweise zwischen 2 Gew.-% und 12 Gew.-%, insbesondere zwischen 4 Gew.-% und 10 Gew.-%, liegt.

In einer weiteren vorteilhaften Ausführungsform der Erfindung enthält das Trennmittel zusätzlich zu AlO(OH) und Al(OH)₃ auch dehyroxiliertes Kaolin, insbesondere in einem Anteil, der zwischen 3 Gew.-% und 10 Gew.-%, vorzugsweise zwischen 4 Gew.-% und 7 Gew.-% des gesamten Gemischs aus Brenngutpartikeln und Trennmittel liegt. Vorzugsweise wird hierbei als Trennmittel eine Drei-Komponenten-Mischung eingesetzt, die - wiederum abgesehen von gewöhnlichen Verunreinigungen in der Größenordnung von maximal 1 - 2 Gew.-% - nur AlO(OH), Al(OH)₃ und dehydroxiliertes Kaolin enthält. Der Begriff "dehydroxiliertes Kaolin" wird als Oberbegriff verwendet, der Metakaolin und kalziniertes (wasserfreies) Kaolin umfasst. Metakaolin wird üblicherweise durch Erhitzung von Kaolin auf Temperaturen zwischen 650°C und 750°C hergestellt. Kalziniertes (wasserfreies) Kaolin wird durch Erhitzung von Kaolin auf Temperaturen über 900 °C gewonnen, vgl. zum Beispiel EP 1 715 009 A2.

Als besonders zweckmäßig haben sich Ausführungsformen des Verfahrens erwiesen, bei denen der Al(OH)₃-Anteil in dem Trennmittel grobköringer gewählt ist als der AlO(OH)-Anteil.

Das für das Trennmittel verwendete AlO(OH) wird in zweckmäßiger Ausgestaltung der Erfindung derart ausgewählt oder konditioniert, dass mindestens 90 % der AlO(OH)-Partikel in dem Trennmittel einen Partikeldurchmesser von weniger als 1 Mikrometer (d₉₀ = 1 µm), vorzugsweise weniger als 0,7 Mikrometer (d₉₀ = 0,7 µm) aufweisen. Experimentell als besonders geeignet befunden und daher auch bevorzugt ist hierbei ein Produkt, das 99,7 % AlO(OH) in einer Korngrößenverteilung von d₁₀ = 0,2 µm, d₅₀ = 0,35 µm und d₉₀ = 0,6 µm enthält.

Das für das Trennmittel gegebenenfalls verwendete Al(OH)₃ wird in zweckmäßiger Ausgestaltung der Erfindung derart ausgewählt oder konditioniert, dass mindestens 90 % der Al(OH)₃-Partikel in dem Trennmittel einen Partikeldurchmesser von weniger als 4 Mikrometer (d₉₀ = 4 µm), vorzugsweise weniger als 3,5 Mikrometer (d₉₀ = 3,5 µm) aufweisen. Experimentell als besonders geeignet befunden und daher auch bevorzugt ist hierbei ein Produkt, das 99,5 % Al(OH)₃ in einer Korngrößenverteilung von d₁₀ = 0,6 µm, d₅₀ = 1,3 µm und d₉₀ = 3.2 µm enthält.

Das für das Trennmittel gegebenenfalls verwendete dehydroxilierte Kaolin wird in zweckmäßiger Ausgestaltung der Erfindung derart ausgewählt oder konditioniert, dass mindestens 90 % der dehydroxilierten Kaolin-Partikel in dem Trennmittel einen Partikeldurchmesser von weniger als 5 Mikrometern, vorzugsweise weniger als 4 Mikrometern aufweisen. Experimentell als besonders geeignet befunden und daher auch bevorzugt sind hierbei Produkte, in denen die dehydroxilierten Kaolin-Partikel eine mittlere Korngröße von 3 µm aufweisen.

Die Brenngutpartikel werden vorzugsweise durch Sprühgranulierung hergestellt. Alternativ werden die Brenngutpartikel durch Granulierung in einem Intensivmischer, insbesondere einem Intensivmischer nach Eirich, hergestellt.

In einer zweckmäßigen Ausführung des Verfahrens werden die Brenngutpartikel vor der Aufgabe in die Brennkammer in einem Intensivmischer mit dem pulverförmigen Trennmittel vermischt. Durch die Vermischung in dem Intensivmischer wird dabei eine besonders dichte und homogene Verteilung des Trennmittels auf der Oberfläche der Brenngutpartikel erzielt, wodurch - im Vergleich zu andersartigen Vermischung von Brenngutpartikeln und Trennmittel - Trennmittel gespart werden kann, ohne dass eine Zunahme von Agglomeration während des Brennprozesses in Kauf genommen werden müsste.

Als Intensivmischer wird ein Mischer bezeichnet, bei dem der Mischvorgang bei einem Leistungseintrag von mindestens etwa 2 Kilowatt pro 100 Kilogramm Mischgut durchgeführt wird, oder dessen Mischwerkzeug sich bei dem Mischvorgang mit einer Umfangsgeschwindigkeit von mindestens 15 Metern pro Sekunde relativ zu dem Mischbehälter bewegt. Bevorzugt weist der erfindungsgemäß eingesetzte Intensivmischer einen Leistungseintrag von mindestens 5 Kilowatt pro 100 Kilogramm Mischgut, insbesondere mindestens 10 Kilowatt pro 100 Kilogramm auf. In einer bevorzugten Ausführungsform wird zum Mischen der Brenngutpartikel mit dem Trennmittel ein Intensivmischer nach Eirich verwendet. Prinzipiell ist es im Rahmen der Erfindung jedoch auch möglich, das Verfahren mit einem "liegenden" Pflugscharmischer nach Lödige oder mit einem durch einen konischen Mischbehälter gekennzeichneten Mischer nach Ekato durchzuführen. Vorzugsweise wird das Gemenge aus Brenngutpartikeln und Trennmittel vor dem Einbringen in die Brennkammer für eine Mischdauer von 1 bis 10 Minuten, insbesondere für ca. 2 bis 5 Minuten intensiv gemischt.

Als Ofen für den Expansionsprozess wird vorzugsweise ein Drehrohrofen herangezogen. Dabei wird insbesondere ein durch Beflammung direkt (also von innen) beheizter Drehrohrofen eingesetzt, der aufgrund seiner rationellen Betriebsweise und der (vergleichsweise einfach erreichbaren) hohen Brenntemperaturen für die Herstellung von Glas-Mikrohohlkugeln vorteilhaft ist. Ein entscheidender Fortschritt liegt dabei darin, dass mit dem erfindungsgemäßen Verfahren die Vorteile des direkt beheizten Drehrohrofens genutzt werden können, ohne dass es zu einer Überhitzung der Brenngutpartikel und der daraus entstehenden Mikrohohlkugeln kommt. Alternativ hierzu wird ein (wiederum vorzugsweise durch Beflammung) indirekt beheizter Drehrohrofen eingesetzt. In dem letzteren Fall erfolgt die Wärmezufuhr in die Brennkammer von außen über die Mantelfläche des Drehrohrs. Wiederum alternativ wird im Rahmen des erfindungsgemäßen Verfahrens ein Schachtofen (Vertikalofen) verwendet, in dem die Brenngutpartikel in einem aufsteigenden Heißgasstrom expandiert werden. Auch in dieser Verfahrensvariante bewirkt die Verwendung des erfindungsgemäßen Trennmittels erkanntermaßen eine wesentliche Verringerung der Klebeneigung und trägt vorteilhaft zur Hohlkugelbildung bei.

Der Brennprozess wird vorzugsweise bei einer Brenntemperatur zwischen 800°C und 1150°C, vorzugsweise zwischen 850°C und 1000°C durchgeführt. Ein Vorteil des erfindungsgemäßen, AlO(OH)-haltigen Trennmittels gegenüber anderen Trennmitteln besteht hierbei darin, dass eine vergleichsweise hohe Brenntemperatur eingestellt werden kann, ohne dass es (jedenfalls in erheblichem Maß) zu einer Agglomeration der Brenngutpartikel kommt.

Eine spezielle Verkörperung der Erfindung sind die nach dem vorstehend beschriebenen erfindungsgemäßen Verfahren erhältlichen Mikrohohlkugeln aus Glas. Analysen haben ergeben, dass sich bei diesem Verfahren während des Expansionsprozesses Aluminiumoxid aus dem Trennmittel in der aufgeschmolzenen Glaswand der Mikrohohlkugeln einlagert. Die Glaswand weist hierdurch einen zweiphasigen Aufbau auf. Während ein innerer Bereich der Glaswand aus einem Kalk-Natron-Silikatglas mit geringem Aluminiumgehalt besteht, ist der Aluminiumanteil in einer äußeren Schicht der Glaswand deutlich erhöht. Die äußere Schicht weist beispielsweise eine Stärke von etwa 1 Mikrometer auf und hat damit regelmäßig eine geringere radiale Ausdehnung als der innere Bereich der Glaswand. Durch den erhöhten Aluminiumanteil in der äußeren Schicht der Glaswand wird die chemische Beständigkeit der Glaswand - im Vergleich zu dem Kalk-Natron-Silikatglas des inneren Bereichs - signifikant erhöht.

Eine weitere Verkörperung der Erfindung ist Verwendung eines Trennmittels, das AlO(OH), vorzugsweise in Mischung mit Al(OH)₃ sowie optional dehydroxiliertem Kaolin enthält, bei der Herstellung von Mikrohohlkugeln aus Glas.

Nachfolgend werden Ausführungsbeispiele der Erfindung anhand einer Zeichnung näher erläutert. Darin zeigen:
- Fig. 1: in grob schematisch vereinfachter Darstellung eine Anlage zur Herstellung von Mikrohohlkugeln aus Glas, mit einem Mischer zur Vermischung von Brenngutpartikeln mit einem pulverförmigen Trennmittel aus AlO(OH), optional in Mischung mit Al(OH)₃ und ggf. dehydroxiliertem Kaolin, sowie mit einem als Drehrohrofen ausgeführten Brennofen, in den das Gemisch aus Brenngutpartikeln und Trennmittel eingebracht wird, so dass die Brenngutpartikel zu den gewünschten Mikrohohlkugeln expandiert werden,
- Fig. 2: in Darstellung gemäß Fig. 1 eine alternative Ausführungsform der Anlage, in der der Brennofen als Schachtofen ausgeführt ist,
- Fig. 3: eine Rasterelektronenmikroskopaufnahme einer erfindungsgemäß hergestellten Mikrohohlkugel aus Glas in aufgebrochenem Zustand, und
- Fig. 4: eine gegenüber Fig. 3 vergrößerte Rasterelektronenmikroskopaufnahme der aufgebrochenen Glaswand einer erfindungsgemäß hergestellten Mikrohohlkugel.

Einander entsprechende Teile und Strukturen sind in allen Figuren stets mit gleichen Bezugszeichen versehen.

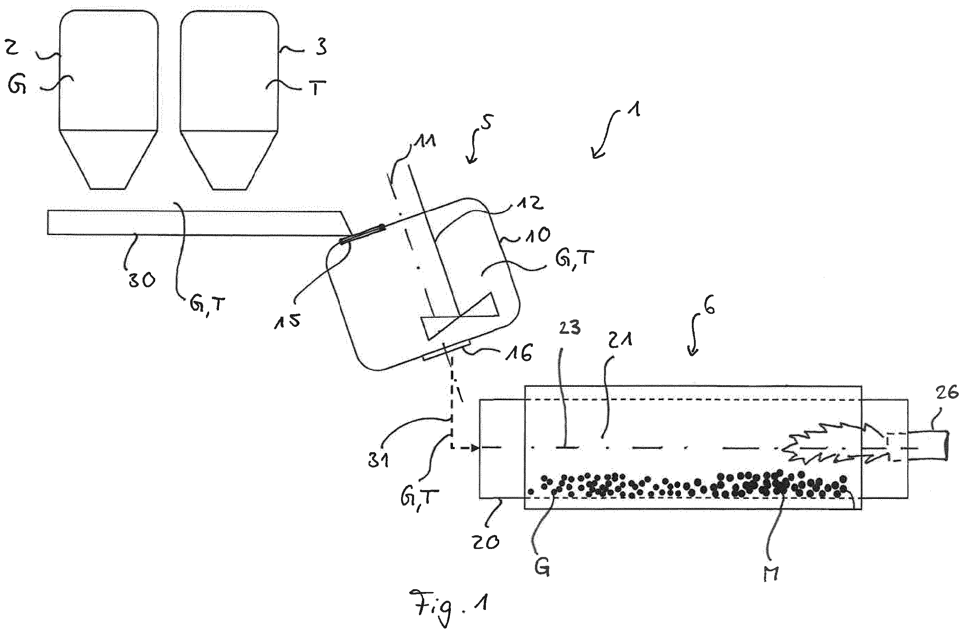

Fig. 1 zeigt eine Anlage 1 zur Herstellung von Mikrohohlkugeln M aus Glas, d.h. zur Herstellung von hohlen Glaskugeln, deren typische Durchmesser beispielsweise überwiegend in einem Bereich zwischen 40 und 350 Mikrometern liegen.

Die Anlage 1 umfasst einen ersten Silo 2 als Vorlagebehälter für Brenngutpartikel G, sowie einen zweiten Silo 3 als Vorlagebehälter für pulverförmiges Trennmittel T. Weiterhin umfasst die Anlage 1 einen Mischer 5 zur Vermischung der Brenngutpartikel G mit dem Trennmittel T, sowie einen als Drehrohrofen 6 ausgeführten Brennofen zur Expansion der Brenngutpartikel G zu den gewünschten Mikrohohlkugeln M.

Bei den in dem ersten Silo 2 gelagerten Brenngutpartikeln G handelt es sich um annähernd kugelförmige Partikel, deren Durchmesser beispielsweise etwa im Bereich zwischen 20 Mikrometer und 200 Mikrometer liegen. Die Brenngutpartikel G sind vorzugsweise durch Sprühgranulation hergestellt. Hierzu werden als Ausgangsstoffe Glasmehl, Wasserglas und ein Blähmittel (z.B. Natronsalpeter, Zucker oder Glycerin) mit Wasser zu einer dünnflüssigen Suspension (Schlicker) angesetzt, die in einem Sprühturm zur Bildung der Brenngutpartikel G versprüht wird. Die Brenngutpartikel G werden anschließend getrocknet. Optional erfolgt nach der Trocknung eine Klassierung, wobei die Fraktion mit den gewünschten Durchmessern ausgewählt und dem Silo 2 zugeführt wird.

In der dargestellten Ausführungsform der Anlage 1 ist der Mischer 5 als Intensivmischer nach Eirich ausgeführt. Der Mischer 5 umfasst hierbei einen im Wesentlichen becherförmigen Mischbehälter 10, der um seine gegenüber der Vertikalen schräg stehende Längsachse 11 rotierbar gelagert ist. Ein gegenläufig zu dem Mischbehälter 10 rotierbares Mischwerkzeug 12 ist parallel zur Längsachse 11 exzentrisch in dem Mischbehälter 10 angeordnet. Der Mischbehälter 10 ist über eine verschließbare Deckelöffnung 15 beschickbar und über eine ebenfalls verschließbare zentral angeordnete Bodenöffnung 16 entleerbar. In beispielhafter Dimensionierung hat der Mischer 5 in dieser Ausführungsform einen Leistungseintrag von 10 bis 20 Kilowatt pro 100 kg Mischgut (vorzugsweise etwa 15 Kilowatt pro 100 kg Mischgut) und eine Umfangsgeschwindigkeit an der äußersten Stelle des Rührwerkzeugs von mindestens 30 Metern pro Sekunde. In alternativen Ausführungsformen kann die Anlage 1 aber auch einen andersartigen Mischer, beispielsweise einen Trommelmischer, enthalten.

Der Drehrohrofen 6 umfasst in herkömmlicher Weise ein lang ausgedehntes hohlzylindrisches Drehrohr 20 aus hochtemperaturfestem Stahl, in dessen Innenraum eine Brennkammer 21 ausgebildet ist. Das Drehrohr 20 ist um seine gegenüber der Horizontalen leicht geneigt angeordnete Längsachse 23 rotierbar gelagert. Gemäß der Darstellung der Drehrohrofen als direkt beheizter Drehrohrofen ausgebildet. Die Brennkammer 21 ist hierbei direkt mit einem gasbetriebenen Brenner 26 befeuert, der an dem ausgangsseitigen Ende des Drehrohrs 21 angeordnet ist.

Im Betrieb der Anlage 1 werden aus den beiden Silos 2,3 Brenngutpartikel G und Trennmittel T auf eine unterhalb der Silos 2,3 angeordnete Mischrinne 30 dosiert, so dass dort ein Vor-Gemisch aus Brenngutpartikeln G und Trennmittel T mit einem vorgegebenen Trennmittel-Anteil vorliegt. Die Einstellung des gewünschten Massenverhältnisses erfolgt beispielsweise mittels einer Waage. Alternativ wird die Einstellung volumetrisch beispielsweise mittels den Silos 2,3 zugeordneter Zellenradschleusen oder Förderschnecken vorgenommen. Über die Mischrinne 30 wird das Vor-Gemisch aus Brenngutpartikeln G und Trennmittel T in den Mischbehälter 10 des Mischers 5 gefördert.

Alternativ zu der beispielhaften Darstellung kann die Mischrinne 30 auch entfallen, wobei in diesem Fall Brenngutpartikel G und Trennmittel T jeweils separat in den Mischer 5 dosiert werden, so dass dort das gewünschte Mischungsverhältnis erzeugt wird.

Der Mischvorgang erfolgt satzweise, wobei jeweils eine Charge des Vor-Gemischs einem Mischvorgang unterzogen wird. Das Vor-Gemisch aus Trennmittel T und Brenngutpartikel G wird für eine Mischdauer von 1 bis 10 Minuten in dem Mischer 5 homogenisiert. Nach Abschluss des Mischvorgangs wird das Gemisch aus Brenngutpartikeln G und Trennmittel T über die Bodenöffnung 16 aus dem Mischbehälter 10 ausgetragen. Das Gemisch wird optional in einem dem Mischer 5 und dem Drehrohrofen 6 zwischengeschalteten Pufferbehälter gespeichert (nicht explizit dargestellt).

Aus der Mischrinne 30 oder dem gegebenenfalls nachgeschalteten Pufferbehälter wird das Gemisch aus Brenngutpartikeln G und Trennmittel T kontinuierlich mittels einer hier nicht explizit dargestellten Beschickungseinrichtung der Brennkammer 21 des Drehrohrofens 6 zugeführt (angedeutet durch einen Pfeil 31). In der Brennkammer 21 wird im Betrieb der Anlage 1 mittels des Brenners 26 eine vorgegebene Brenntemperatur erzeugt, bei der die Brenngutpartikel G in einem Zeitraum von etwa 1 bis 15 Minuten sukzessive zu den gewünschten Mikrohohlkugeln M aufblähen.

Die erzeugten Mikrohohlkugeln M werden aus der Brennkammer 21 ausgetragen und nach einem Kühl- und Sortierschritt einem Produktreservoir zugeführt (hier nicht dargestellt). Das Trennmittel T wird durch Sieben oder Windsichten von den Mikrohohlkugeln M getrennt. Optional werden die Mikrohohlkugeln M, wiederum durch Sieben oder Windsichten, von multizellulär (schaumartig) expandierten Partikeln (also Partikeln mit mehreren großen Hohlräumen) getrennt, die bei dem Brennprozess gegebenenfalls neben den Mikrohohlkugeln M entstehen. Diese multizellulär expandierten Partikel werden entweder als Schlechtteile verworfen oder einer anderweitigen Verwendung zugeführt.

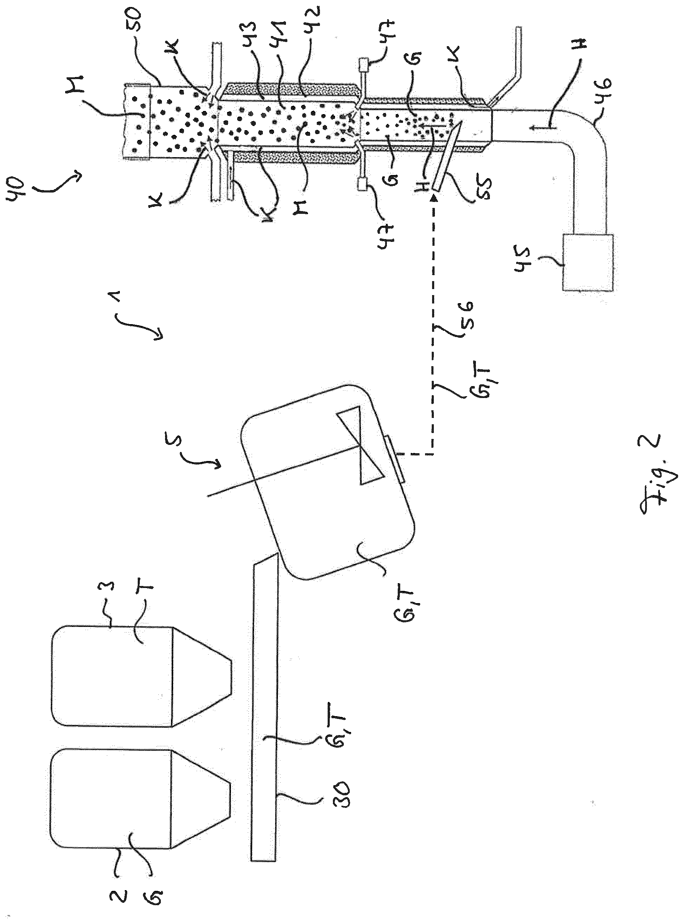

Fig. 2 zeigt eine alternative Ausführungsform der Anlage 1. Im Unterschied zu der ersten Ausführungsform wird hier der Expansionsprozess nicht in einem Drehrohrofen durchgeführt, sondern in einem Schachtofen 40.

Der Schachtofen 40 umfasst eine schachtartig langgestreckte, hinsichtlich der Längserstreckung vertikal ausgerichtete Brennkammer 41, die von einem nach außen hin thermisch isolierten Doppelmantel 42 aus Stahl umgeben ist. In einem durch den Doppelmantel 42 gebildeten Kühlspalt 43 ist Kühlluft K geführt. Nach oben hin ist die Brennkammer 41 stufenartig erweitert.

Dem Schachtofen 40 ist ein gasbetriebener Brenner 45 zugeordnet, der dazu dient, in der Brennkammer 41 einen von unten nach oben gerichteten Heißgasstrom H zu erzeugen. Hierzu wird das durch den Brenner 45 erzeugte Heißgas über eine Heißgasleitung 46 der Brennkammer 41 als Heißgasstrom H zugeführt. Etwa auf halber Höhe der Brennkammer 41, nämlich in dem Bereich der vorstehend beschriebenen Querschnittserweiterung, ist eine Anzahl von (beispielsweise sechs) zusätzlichen, gasbetriebenen Brennern 47 angeordnet, die kranzartig um den Umfang der Brennkammer 41 verteilt positioniert sind.

Oberhalb der Brennkammer 41 schließt gemäß Fig. 2 ein Bereich an, der als Kühlfalle 50 dient und der einen gegenüber dem Querschnitt des oberen Abschnitts der Brennkammer 41 nochmals erweiterten Querschnitt aufweist. Alternativ können die Brennkammer 41 sowie die optional vorgesehene Kühlfalle 50 über die gesamte Höhe mit einem einheitlichen Querschnitt ausgeführt sein.

Schließlich umfasst der Schachtofen 40 eine Beschickungseinrichtung, die hier durch eine Brenngutleitung 55 gebildet ist. Die Brenngutleitung 55 ist durch den Doppelmantel 42 hindurch geführt und mündet in den unteren Abschnitt der Brennkammer 41. Die Brenngutleitung 55 ist aus dem Mischer 5 oder einem ggf. nachgeschalteten Pufferbehälter gespeist (angedeutet durch den Pfeil 56). Die Brenngutleitung 55 verläuft insbesondere in Beschickungsrichtung fallend, so dass das Brenngut ohne aktive Förderung (lediglich unter Wirkung der Schwerkraft) in die Brennkammer 41 rutscht. Optional kann die Beschickungseinrichtung allerdings auch Mittel zur aktiven Förderung des Brennguts umfassen, z.B. ein Druckluftsystem oder eine Förderschnecke.

Im Betrieb der Anlage 1 wird in dem vorliegenden Ausführungsbeispiel das homogene Gemisch aus Brenngutpartikeln G und Trennmittel T mittels der Brenngutleitung 55 kontinuierlich in die Brennkammer 41 gefördert, wo sie von dem Heißgasstrom H erfasst und nach oben getragen werden.

Dabei wird in dem unteren Abschnitt der Brennkammer 41 eine Temperatur von beispielsweise etwa 650 °C erzeugt, bei der die Brenngutpartikel G zunächst vorgewärmt werden. Durch die Brenner 47 wird die Brennkammer 41 zusätzlich beheizt, so dass die Temperatur im oberen Abschnitt der Brennkammer 41 auf die die Erweichungstemperatur des Glasmehls überschreitende Brenntemperatur erhöht wird. Die Expansion der Brenngutpartikel G zu den Mikrohohlkugeln M erfolgt hier im kurzzeitigen Flammenkontakt bei ca. 1400 °C.

Die expandierten Mikrohohlkugeln M werden schließlich der Kühlfalle 50 zugeführt und dort durch Zufuhr von Kühlluft K abgeschreckt. Schließlich werden die Mikrohohlkugeln M über einen Feststoffabscheider von dem Heißgasstrom abgetrennt und gegebenenfalls nach einem Sortierschritt einem Produktreservoir zugeführt (hier wiederum nicht dargestellt). Das mit ausgetragene Trennmittel T sowie optional etwaige Schlechtteile (insbesondere multizellulär expandierte Partikel), werden mittels eines Zyklons wiederum von den Mikrohohlkugeln M getrennt.

### Beispiel 1:

Aus 91 Gew.-% Altglasmehl (d₉₇ ≈ 50 µm), 7 Gew.-% Wasserglas und 2 Gew.-% Natronsalpeter wurde unter Zugabe von Wasser ein dünnflüssiger Schlicker hergestellt, der anschließend im Sprühturm granuliert wurde. Für das vorliegende Beispiel wurde die feine Kornfraktion des Sprühgranulats herangezogen, die mit dem Luftstrom aus dem Sprühturm ausgetragen und in einem nachgeschalteten Zyklon abgeschieden wurde. Die so gewonnenen Brenngutpartikel haben eine Korngrößenverteilung von d₁₀ ≈ 30 µm, d₅₀ ≈ 80 µm und d₉₀ ≈ 175 µm.

Die getrockneten Brenngutpartikel wurden für 5 Minuten in einem Intensivmischer nach Eirich mit dem hier aus AlO(OH) (Korngrößenverteilung: d₁₀ = 0,2 µm ; d₅₀ = 0,35 µm ; d₉₀ = 0,6 µm ; Reinheit: 99,7 %) Trennmittel in folgendem Mengenverhältnis gemischt:
- 83,3 Gew.-% Brenngutpartikel
- 16,7 Gew.-% Trennmittel (AIO(OH))

Diese Mischung wurde anschließend in einem indirekt beheizten Drehrohrofen (Technikumsmaßstab) expandiert. In diesem und allen nachstehend beschriebenen Versuchen wurde die Brenntemperatur während des Versuchsablaufs variiert, bis (bei den angegebenen Brenntemperaturen, im Falle des Beispiels 1 bei einer Brenntemperatur von 960 °C) Mikrohohlkugeln produziert wurden.

In diesem Versuch konnten Mikrohohlkugeln gewonnen werden, die zum Teil allerdings eine unrunde Form aufwiesen.

### Beispiel 2:

Die analog Beispiel 1 hergestellten Brenngutpartikel wurden wiederum für 5 Minuten im Eirich-Mischer mit dem hier aus AlO(OH) (wie im Beispiel 1) und Al(OH)₃ (Korngrößenverteilung: d₁₀ = 0,6 µm ; d₅₀ = 1,3 µm ; d₉₀ = 3.2 µm ; Reinheit: 99,5 %) bestehenden Trennmittel in folgendem Mengenverhältnis gemischt:
- 83,3 Gew.-% Brenngutpartikel
- 16,7 Gew.-% Trennmittel (8,35 Gew.-% AlO(OH) sowie 8,35 Gew.-% Al(OH)₃)

Diese Mischung wurde analog zu Beispiel 1 in dem indirekt beheizten Drehrohrofen (Technikumsmaßstab) bei einer Brenntemperatur von 960 °C expandiert.

In diesem Versuch konnten Mikrohohlkugeln gewonnen werden, die insgesamt eine rundere Form aufwiesen als die Mikrohohlkugeln aus Beispiel 1. Zudem wiesen die Hohlkugelwände visuell eine homogenere ("stärker verglaste") Struktur auf. Allerdings waren auch bei diesem Versuch Partikel mit unrunder Form erkennbar. Zudem traten neben einzelnen Mikrohohlkugeln auch Agglomerate auf.

### Beispiel 3:

Die analog Beispiel 1 hergestellten Brenngutpartikel wurden hier für 20 Minuten in einem Trommel-Mischer mit dem hier aus AlO(OH) (wie im Beispiel 1) und Al(OH)₃ (wie im Beispiel 2) bestehenden Trennmittel in folgendem Mengenverhältnis gemischt:
- 70 Gew.-% Brenngutpartikel
- 30 Gew.-% Trennmittel (15 Gew.-% AlO(OH) sowie 15 Gew.-% Al(OH)₃)

Diese Mischung wurde abweichend von Beispiel 1 und 2 in einem direkt beheizten, industriellen Drehrohrofen (Produktionsmaßstab) bei einer Brenntemperatur von 926 °C expandiert.

Dieser Versuch ergab Mikrohohlkugeln mit guter Sphärizität und visuell annähernd homogener ("verglaster") Hohlkugelwand. Es traten keine Agglomerate auf.

### Beispiel 4:

Die analog Beispiel 1 hergestellten Brenngutpartikel wurden hier analog zu Beispiel 3 für 20 Minuten in dem Trommel-Mischer mit dem hier aus AlO(OH) (wie im Beispiel 1) und Al(OH)₃ (wie im Beispiel 2) bestehenden Trennmittel in folgendem Mengenverhältnis gemischt:
- 77 Gew.-% Brenngutpartikel
- 23 Gew.-% Trennmittel (8 Gew.-% AlO(OH) sowie 15 Gew.-% Al(OH)₃)

Diese Mischung wurde analog zu Beispiel 3 in dem direkt beheizten Drehrohrofen (Produktionsmaßstab) bei einer Brenntemperatur von 882 °C expandiert.

Dieser Versuch ergab ebenfalls Mikrohohlkugeln mit guter Sphärizität und visuell annähernd homogener ("verglaster") Hohlkugelwand. Es traten nur vereinzelt Agglomerate auf.

### Beispiel 5:

Die analog Beispiel 1 hergestellten Brenngutpartikel wurden hierfür 5 Minuten im Eirich-Mischer mit dem hier aus AlO(OH) (wie in Beispiel 1) und Al(OH)₃ (wie in Beispiel 2) bestehenden Trennmittel in folgendem Mengenverhältnis gemischt:
- 81,1 Gew.-% Brenngutpartikel
- 18,9 Gew.-% Trennmittel (4,7 Gew.-% AlO(OH) sowie 14,2 Gew.-% Al(OH)₃)

Diese Mischung wurde analog zu Beispiel 1 in dem indirekt beheizten Drehrohrofen (Technikumsmaßstab) bei einer Brenntemperatur von 960 - 990 °C expandiert.

Dieser Versuch ergab ebenfalls Mikrohohlkugeln mit guter Sphärizität und visuell annähernd homogener ("verglaster") Hohlkugelwand. Es traten trotz Erhöhung der Brenntemperatur auf 990 °C nur wenige Agglomerate auf.

### Beispiel 6:

Die analog Beispiel 1 hergestellten Brenngutpartikel wurden hierfür 5 Minuten im Eirich-Mischer mit dem hier aus AlO(OH) (wie in Beispiel 1), Al(OH)₃ (wie in Beispiel 2) und kalziniertem Kaolin (Korngrößenverteilung: d₁₀ = 1 µm, d₅₀ = 2 µm, d₉₀ = 10 µm) bestehenden Trennmittel in folgendem Mengenverhältnis gemischt:
- 70 Gew.-% Brenngutpartikel
- 30 Gew.-% Trennmittel (6 Gew.-% AlO(OH) sowie 19 Gew.-% Al(OH)₃ sowie 5 Gew.-% kalziniertes Kaolin)

Diese Mischung wurde analog zu Beispiel 3 in dem direkt beheizten Drehrohrofen (Produktionsmaßstab) bei einer Brenntemperatur von 828 °C expandiert.

Dieser Versuch ergab ebenfalls Mikrohohlkugeln mit guter Qualität.

### Vergleichsbeispiel 1:

Die analog Beispiel 1 hergestellten Brenngutpartikel wurden hierfür 5 Minuten im Eirich-Mischer mit dem hier aus feinkörnigem Al(OH)₃ (Korngrößenverteilung: d₁₀ = 0,3µm; d₅₀ = 0,4 µm ; d₉₀ = 0,8 µm ; Reinheit: 99,3%) bestehenden Trennmittel in folgendem Mengenverhältnis gemischt:
- 88,9 Gew.-% Brenngutpartikel
- 11,1 Gew.-% Trennmittel (Al(OH)₃)

Diese Mischung wurde in einem indirekt beheizten Drehrohrofen (Technikumsmaßstab) bei einer Brenntemperatur von 846 - 970 °C expandiert.

Dieser Versuch ergab nahezu ausschließlich Agglomerate.

### Vergleichsbeispiel 2:

Die analog Beispiel 1 hergestellten Brenngutpartikel wurden hierfür 5 Minuten im Eirich-Mischer mit dem hier aus Al(OH)₃ (wie im Beispiel 2) bestehenden Trennmittel in folgendem Mengenverhältnis gemischt:
- 75 Gew.-% Brenngutpartikel
- 25 Gew.-% Trennmittel (Al(OH)₃)

Diese Mischung wurde analog zu Beispiel 3 in dem direkt beheizten Drehrohrofen (Produktionsmaßstab) bei einer Brenntemperatur von 720 °C expandiert.

Bei diesem Versuch konnte keine zufriedenstellende Produktqualität erzielt werden. Neben Mikrohohlkugeln enthielt das expandierte Material einen hohen Anteil an Schlechtteilen (mehrzellig expandierten Partikeln).

### Vergleichsbeispiel 3:

Die analog Beispiel 1 hergestellten Brenngutpartikel wurden hierfür 5 Minuten im Eirich-Mischer mit dem hier aus Al(OH)₃ (wie im Beispiel 2) bestehenden Trennmittel in folgendem Mengenverhältnis gemischt:
- 76 Gew.-% Brenngutpartikel
- 24 Gew.-% Trennmittel (Al(OH)₃)

Diese Mischung wurde analog zu Beispiel 3 in dem direkt beheizten Drehrohrofen (Produktionsmaßstab) bei einer Brenntemperatur von 800 °C expandiert.

Bei diesem Versuch konnte keine stabile Produktion von Mikrohohlkugeln aufrechterhalten werden. Nach anfänglicher Produktion von Mikrohohlkugeln guter Qualität traten zunehmend Agglomerate und Schlechtpartikel (mehrzellig expandierte Partikel) auf.

### Vergleichsbeispiel 4

Die analog Beispiel 1 hergestellten Brenngutpartikel wurden hierfür 5 Minuten im Eirich-Mischer mit dem hier aus Metakaolin bestehenden Trennmittel in folgendem Mengenverhältnis gemischt:
- 75 Gew.-% Brenngutpartikel
- 15 Gew.-% Trennmittel (Metakaolin)

Diese Mischung wurde analog zu Beispiel 3 in dem direkt beheizten Drehrohrofen (Produktionsmaßstab) bei einer Brenntemperatur von 862 °C bis 930 °C expandiert.

Das aus diesem Versuch resultierende Produkt bestand nahezu ausschließlich aus multizellulärexpandierten Partikeln. Es wurden keine Agglomerate beobachtet.

### Analyse von Mikrohohlkugeln aus Beispiel 5

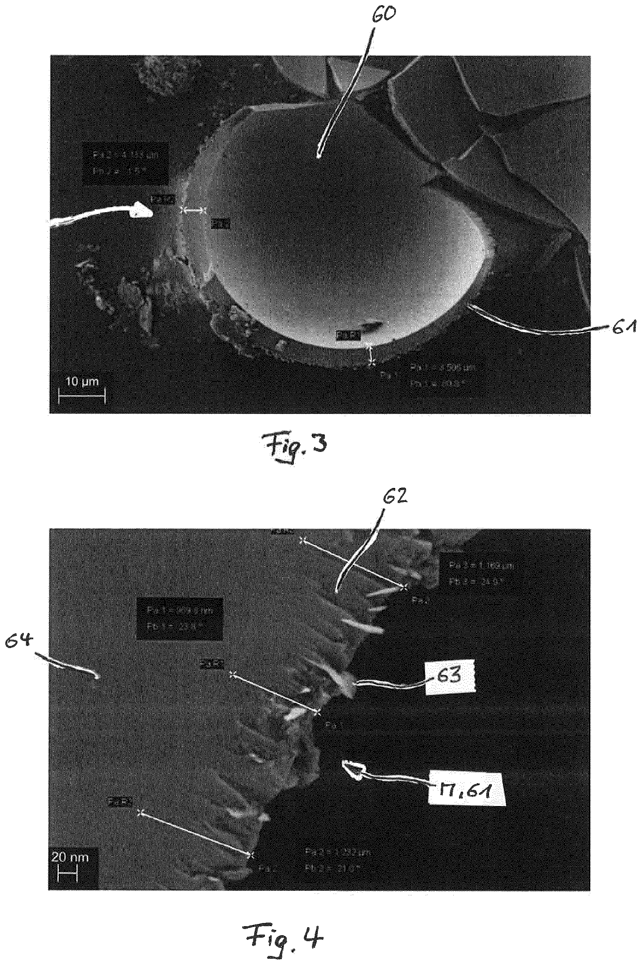

Die Fig. 3 und 4 zeigen Rasterelektronenmikroskopaufnahmen aufgebrochener Mikrohohlkugeln M, die in dem als Beispiel 5 beschriebenen Versuch hergestellt wurden. Aus Fig. 3 ist ersichtlich, dass die hier abgebildete Mikrohohlhohlkugel M, deren Durchmesser ca. 70 Mikrometer beträgt, durch einen einzigen zentralen und sphärischen Hohlraum 60 gebildet ist, der von einer ca. 2 bis 5 Mikrometer dünnen Glaswand 61 umgeben ist. Aus den Fig. 3 und 4 ist ersichtlich, dass in eine radial äußere Schicht 62 der Glaswand 61, deren radiale Ausdehnung ca. 1 Mikrometer beträgt, Aluminiumoxidpartikel 63 eingeschmolzen sind. Die Glaswand 61 weist dabei eine auch in der Aufnahme gemäß Fig. 4 erkennbare Zweiphasigkeit auf, durch die die äußere Schicht 62 von einem verbleibenden, inneren Bereich 64 der Glaswand 61 abgegrenzt ist.

Durch energiedispersive Röntgenspektroskopie (EDX) an den Mikrohohlkugeln M konnte nachgewiesen werden, dass die unter dem Rasterelektronenmikroskop erkennbare Zweiphasigkeit des Wandmaterials mit einem Gradienten der chemischen Zusammensetzung des Wandmaterials verbunden ist, der sich insbesondere in dem Aluminiumgehalt wiederspiegelt. Während in dem inneren Bereich 64 der Glaswand 61 eine für ein Kalk-Natron-Glas typische chemische Zusammensetzung mit einem Aluminiumgehalt von 1,16 Gew.-% gemessen wurde, ergab die EDX Messung für den Aluminiumgehalt der äußeren Schicht 62 eine Abschätzung von ca. 14 Gew,-%.

### Bezugszeichenliste

- 1: Anlage
- 2: Silo
- 3: Silo
- 5: Mischer
- 6: Drehrohrofen
- 10: Mischbehälter
- 11: Längsachse
- 12: Mischwerkzeug
- 15: Deckelöffnung
- 16: Bodenöffnung
- 20: Drehrohr
- 21: Brennkammer
- 23: Längsachse
- 25: Ummantelung
- 26: Brenner
- 30: Mischrinne
- 31: Pfeil
- 40: Schachtofen
- 41: Brennkammer
- 42: Doppelmantel
- 43: Kühlspalt
- 45: Brenner
- 46: Heißgasleitung
- 47: Brenner
- 50: Kühlfalle
- 55: Brenngutleitung
- 56: Pfeil
- 60: Hohlraum
- 61: Glaswand
- 62: (äußere) Schicht
- 63: Aluminiumoxidpartikel
- 64: (innerer) Bereich

- G: Brenngutpartikel
- H: Heißgasstrom
- K: Kühlluft
- M: Mikrohohlkugeln
- T: Trennmittel

## Patentansprüche

1. Verfahren zur Herstellung von Mikrohohlkugeln (M) aus Glas
- wobei eine wässrige Suspension aus Ausgangsstoffen, umfassend Glasmehl und Wasserglas angesetzt wird,
- wobei aus der Suspension Brenngutpartikel (G) hergestellt werden,
- wobei die Brenngutpartikel (G) mit einem pulverförmigen Trennmittel (T) vermischt werden,
- wobei das Gemisch aus Brenngutpartikeln (G) und Trennmittel (T) in eine Brennkammer (21,41) eines Ofens (6,40) eingegeben wird, und
- wobei die Brenngutpartikel (G) in der Brennkammer (21,41) bei einer die Erweichungstemperatur des Glasmehls überschreitenden Brenntemperatur zu den Mikrohohlkugeln (M) expandieren,
**dadurch gekennzeichnet,**
**dass** das Trennmittel (T) AlO(OH) enthält.

2. Verfahren nach Anspruch 1,
wobei das Trennmittel (T) zusätzlich Al(OH)₃ enthält.

3. Verfahren nach Anspruch 2,
- wobei der Anteil an Al(OH)₃ in dem Gemisch aus Brenngutpartikeln (G) und Trennmittel (T) zwischen 6 Gew.-% und 30 Gew.-%, vorzugsweise zwischen 8 Gew.-% und 25 Gew.-% liegt, und
- wobei der Anteil an AlO(OH) in dem Gemisch aus Brenngutpartikeln (G) und Trennmittel (T) zwischen 1 Gew.-% und 25 Gew.-%, vorzugsweise zwischen 2 Gew.-% und 12 Gew.-%, insbesondere zwischen 4 Gew.-% und 10 Gew.-%, liegt.

4. Verfahren nach Anspruch 2 oder 3,
wobei das Trennmittel (T) zusätzlich dehydroxiliertes Kaolin enthält.

5. Verfahren nach Anspruch 4,
wobei der Anteil an dehydroxiliertem Kaolin in dem Gemisch aus Brenngutpartikeln (G) und Trennmittel (T) zwischen 3 Gew.-% und 10 Gew.-%, vorzugsweise zwischen 4 Gew.-% und 7 Gew.-% liegt.

6. Verfahren nach einem der Ansprüche 1 bis 5,
wobei der Al(OH)₃-Anteil in dem Trennmittel (T) grobkörniger ist als der - AlO(OH)-Anteil.

7. Verfahren nach einem der Ansprüche 1 bis 6,
wobei mindestens 90 % der Al(OH)₃-Partikel in dem Trennmittel (T) einen Partikeldurchmesser von weniger als 4 Mikrometern, vorzugsweise weniger als 3,5 Mikrometern aufweisen.

8. Verfahren nach einem der Ansprüche 1 bis 7,
wobei mindestens 90 % der AlO(OH)-Partikel in dem Trennmittel (T) einen Partikeldurchmesser von weniger als 1 Mikrometer, vorzugsweise weniger als 0,7 Mikrometern aufweisen.

9. Verfahren nach einem der Ansprüche 1 bis 8,
wobei mindestens 90 % der dehydroxilierten Kaolin-Partikel in dem Trennmittel (T) einen Partikeldurchmesser von weniger als 5 Mikrometern, vorzugsweise weniger als 4 Mikrometern aufweisen.

10. Verfahren nach einem der Ansprüche 1 bis 9,
wobei die Brenngutpartikel (G) in einem Intensivmischer mit dem pulverförmigen Trennmittel (T) vermischt werden.

11. Verfahren nach einem der Ansprüche 1 bis 10,
wobei als Ofen ein Drehrohrofen (6), insbesondere ein direkt beheizter Drehrohrofen herangezogen wird.

12. Verfahren nach einem der Ansprüche 1 bis 10,
wobei als Ofen ein Schachtofen (40) herangezogen wird.

13. Verfahren nach einem der Ansprüche 1 bis 11,
wobei die Brenntemperatur auf einen Wert zwischen 800°C und 1150°C, vorzugsweise zwischen 850°C und 1000°C eingestellt wird.

14. Mikrohohlkugeln (M) aus Glas mit einer einen zentralen Hohlraum (60) umschließenden Glaswand (61), erhältlich nach dem Verfahren gemäß einem der der Ansprüche 1 bis 13.

15. Mikrohohlkugeln nach Anspruch 14, wobei die Glaswand (61) einen ein zweiphasigen Aufbau mit einem radial inneren Bereich (64) und einer radial äußeren Schicht (62) aufweist, wobei das Glas der Glaswand (61) in der äußeren Schicht (62) einen höheren Aluminiumanteil aufweist als in dem inneren Bereich (64).

16. Verwendung eines Trennmittels (T), das AlO(OH), vorzugsweise in Mischung mit Al(OH)₃ enthält, bei der Herstellung von Mikrohohlkugeln (M) aus Glas.

## Claims

1. Method for producing hollow microspheres of glass (M)
- wherein an aqueous suspension of starting materials, comprising finely ground glass and waterglass, is prepared,
- wherein firing material particles (G) are produced from said suspension,
- wherein the firing material particles (G) are mixed with a pulverulent release agent (T),
- wherein the mixture of firing material particles (G) and release agent (T) is introduced into a firing chamber (21, 41) of a furnace (6, 40), and
- wherein the firing material particles (G) expand in the firing chamber (21, 41) at a firing temperature exceeding the softening temperature of the finely ground glass to form the hollow microspheres (M),
**characterized in**
**that** the release agent (T) contains AIO (OH).

2. Method according to claim 1,
wherein the release agent (T) additionally comprises Al(OH)₃.

3. Method according to claim 2,
- wherein the fraction of Al(OH)₃ in the mixture of firing material particles (G) and release agent (T) is between 6 wt % and 30 wt %, preferably between 8 wt % and 25 wt %, and
- wherein the fraction of AIO (OH) in the mixture of firing material particles (G) and release agent (T) being between 1 wt % and 25 wt %, preferably between 2 wt % and 12 wt %, in particular between 4 wt % and 10 wt %.

4. Method according to claim 2 or 3,
wherein the release agent (T) additionally contains dehydroxylated kaolin.

5. Method according to claim 4,
wherein the fraction of dehydroxylated kaolin in the mixture of firing material particles (G) and release agent (T) is between 3 wt % and 10 wt %, preferably between 4 wt % and 7 wt %.

6. Method according to one of claims 1 to 5,
wherein the fraction of Al(OH)₃ in the release agent (T) is coarser than the AIO(OH) fraction.

7. Method according to one of claims 1 to 6,
wherein at least 90% of the Al(OH)₃ particles in the release agent (T) have a particle diameter of less than 4 micrometers, preferably less than 3.5 micrometers.

8. Method according to one of claims 1 to 7,
wherein at least 90% of the AIO(OH) particles in the release agent (T) have a particle diameter of less than 1 micrometer, preferably less than 0.7 micrometer.

9. Method according to one of claims 1 to 8,
wherein at least 90% of the dehydroxylated kaolin particles in the release agent (T) have a particle diameter of less than 5 micrometers, preferably less than 4 micrometers.

10. Method according to one of claims 1 to 9,
wherein the firing material particles (G) are mixed with the pulverulent release agent (T) in an intensive mixer.

11. Method according to one of claims 1 to 10,
wherein the furnace is a rotary tube furnace (6), in particular a directly heated rotary tube furnace.

12. Method according to one of claims 1 to 10,
wherein a shaft furnace (40) is as the furnace.

13. Method according to one of claims 1 to 11,
where the firing temperature is set to a value between 800°C and 1150°C, preferably between 850°C and 1000°C.

14. Hollow microspheres of glass (M) with a glass wall (61) surrounding a central cavity (60), obtainable by the method according to one of claims 1 to 13.

15. Hollow microspheres according to claim 14, wherein the glass wall (61) has a two-phase construction with a radially inner region (64) and a radially outer layer (62), the glass of the glass wall (61) having a higher aluminium portion in the outer layer (62) than in the inner region (64).

16. Use of a release agent (T) containing AIO(OH), preferably in a mixture with Al(OH)₃, in the production of hollow microspheres of glass (M).

## Revendications

1. Procédé de fabrication de microsphères creuses de verre (M)
- dans lequel une suspension aqueuse de matières premières, comprenant de la poudre de verre et du verre soluble, est préparé.
- dans lequel des particules de matériau de cuisson (G) sont produites à partir de ladite suspension,
- dans lequel les particules de matériau de cuisson (G) sont mélangées avec un agent de séparation en poudre (T),
- dans lequel le mélange de particules de matériau de cuisson (G) et d'agent de séparation (T) est introduit dans une chambre de four (21, 41) d'un four (6, 40), et
- dans lequel les particules de matériau de cuisson (G) se dilatent dans la chambre de four (21, 41) à une température de cuisson supérieure à la température de ramollissement de la poudre de verre pour former les microsphères creuses (M)
**caractérisé en ce**
**que** l'agent de séparation (T) contient du AlO (OH).

2. Procédé selon la revendication 1,
dans lequel l'agent de séparation (T) comprend en outre Al(OH)₃.

3. Procédé selon la revendication 2,
- dans lequel la proportion de Al(OH)₃ dans le mélange de particules de matériau de cuisson (G) et d'agent de séparation (T) est comprise entre 6 % en poids et 30 % en poids, de préférence entre 8 % en poids et 25 % en poids, et
- dans lequel la proportion de AlO (OH) dans le mélange de particules de matériau de cuisson (G) et d'agent de séparation (T) est comprise entre 1 % en poids et 25 % en poids, de préférence entre 2 % en poids et 12 % en poids, en particulier entre 4 % en poids et 10 % en poids.

4. Procédé selon la revendication 2 ou 3,
dans lequel l'agent de séparation (T) contient en outre du kaolin déshydroxylé.

5. Procédé selon la revendication 4,
dans lequel la proportion de kaolin déshydroxylé dans le mélange de particules de matériau de cuisson (G) et d'agent de séparation (T) est comprise entre 3 % en poids et 10 % en poids, de préférence entre 4 % en poids et 7 % en poids.

6. Procédé selon l'une des revendications 1 à 5,
dans lequel la proportion de Al(OH)₃ dans l'agent de séparation (T) est plus grossière que la proportion de AlO(OH).

7. Procédé selon l'une des revendications 1 à 6,
dans lequel au moins 90 % des particules de Al(OH)₃ dans l'agent de séparation (T) ont un diamètre de particule inférieur à 4 micromètres, de préférence inférieur à 3,5 micromètres.

8. Procédé selon l'une des revendications 1 à 7,
dans lequel au moins 90 % des particules d'AlO(OH) dans l'agent de séparation (T) ont un diamètre de particule inférieur à 1 micromètre, de préférence inférieur à 0,7 micromètre.

9. Procédé selon l'une des revendications 1 à 8,
dans lequel au moins 90 % des particules de kaolin déshydroxylé dans l'agent de séparation (T) ont un diamètre de particule inférieur à 5 micromètres, de préférence inférieur à 4 micromètres.

10. Procédé selon l'une des revendications 1 à 9,
dans lequel les particules de matériau de cuisson (G) sont mélangées à l'agent de séparation en poudre (T) dans un mélangeur intensif.

11. Procédé selon l'une des revendications 1 à 10,
dans lequel le four est un four rotatif (6), en particulier un four rotatif à chauffage direct.

12. Procédé selon l'une des revendications 1 à 10,
dans lequel un four à cuve (40) sert de four.

13. Procédé selon l'une des revendications 1 à 11,
dans lequel la température de cuisson est fixée à une valeur comprise entre 800°C et 1150°C, de préférence entre 850°C et 1000°C

14. Microsphères creuses de verre (M) avec une paroi de verre (61) entourant une cavité centrale (60), pouvant être obtenues par le procédé selon l'une des revendications 1 à 13.

15. Microsphères creuses selon la revendication 14, dans lesquelles la paroi de verre (61) a une construction à deux phases avec une partie radialement intérieure (64) et une couche radialement extérieure (62), le verre de la paroi de verre (61) ayant une proportion en aluminium plus élevée dans la couche extérieure (62) que dans la partie intérieure (64).

16. Utilisation d'un agent de séparation (T) contenant AlO(OH), de préférence en mélange avec Al(OH)₃, dans la fabrication de microsphères creuses de verre (M).
